# EUROPEAN PATENT SPECIFICATION

(11) **EP 1 427 037 B1**
(45) Date of publication and mention of the grant of the patent: **08.02.2006**
(21) Application number: 03025095.5
(22) Date of filing: 03.11.2003
(51) Int. Cl.: H01M 2/10, H01M 2/20

(54) **Power supply unit for electronic devices**
Vorrichtung zur Energieversorgung eines Gerätes
Unité d'alimentation électrique pour des dispositifs électroniques

(30) Priority: 05.11.2002 JP 2002321186
(43) Date of publication of application: 09.06.2004
(73) Proprietor: ALPS ELECTRIC CO., LTD., Tokyo 145-8501 (JP)
(72) Inventor: Tanaka, Toshihiro, ALPS Electric Co., Ltd., Tokyo 145-8501 (JP); Myochin, Katsumi, ALPS Electric Co., Ltd., Tokyo 145-8501 (JP)
(74) Representative: Klunker . Schmitt-Nilson . Hirsch

(56) References cited:
- EP-A- 0 392 857
- GB-A- 2 300 998
- US-A- 4 965 462

## Description

### BACKGROUND OF THE INVENTION

### 1. Field of the Invention

The present invention relates to a built-in power supply unit for electronic devices that a battery pack is fitted to and, more particularly, to a power supply unit suitable for electronic devices such as personal digital assistants that switch to a backup power source when a battery pack is removed.

### 2. Description of the Related Art

Personal digital assistants such as cell-phones generally have a power supply unit that a battery pack is fitted to. The power supply unit has an insulating battery pack holder with a hollow portion to accommodate a battery pack detachably, A plurality of connector contacts formed of conductive metal are disposed inside the battery pack holder. Part of each connector contact protrudes into the hollow portion. These connector contacts are disposed in the positions corresponding to electrode terminals of the battery pack. When the battery pack is fitted into the hollow portion, the connector contacts are deformed elastically and pressed against the corresponding electrode terminals of the battery pack. The electrode terminals of the battery pack are thus conductively connected to a driver circuit through the connector contacts and power is supplied to the driver circuit.

Some of these types of personal digital assistants have a built-in backup power source in order to be usable even if the battery pack is removed. The backup power source is charged from the fitted battery pack and it discharges according to a change of an electrical signal caused by removal of the battery pack from the power supply unit.

However, the personal digital assistants that switch to the backup power source according to a change of an electrical signal caused by removal of the battery pack as described above have a problem. The problem is that the transmitting and receiving function is lost when the battery pack is replaced because power is not supplied from either the battery pack or the backup power source for a moment.

To solve this problem, a switch unit that can detect that the battery pack is almost completely removed and that can switch to the backup power source before the battery pack is removed completely is being studied. However, it is difficult, because of a restricted space, to add such a switch unit to the power supply unit for the electronic devices that require miniaturization. In addition, it increases the cost.

### SUMMARY OF THE INVENTION

It is an object of the present invention to provide a power supply unit for electronic devices that has a simple structure, that can detect incomplete fitting of a battery pack, and that does not hinder miniaturization of the electronic devices.

In order to attain the above-described object, according to the present invention, a power supply unit accommodates a battery pack with a plurality of electrode terminals and supplies power to a driver circuit of an electronic device. The power supply unit has an insulating battery pack holder with a hollow portion to accommodate the battery pack detachably; a plurality of connector contacts formed of conductive metal and disposed inside the battery pack holder, part of each connector contact protruding toward the hollow portion; and a switch contact formed of conductive metal and disposed inside the battery pack holder, the switch contact capable of detaching from or attaching to a predetermined one of the connector contacts. When the battery pack is accommodated in the hollow portion, the plurality of electrode terminals elastically come into contact with corresponding connector contacts to be conductively connected to the driver circuit, and the predetermined connector contact is elastically deformed by the corresponding electrode terminal to separate from the switch contact. When the predetermined connector contact protrudes into the hollow portion by a predetermined distance according to a reduction in urging force of the electrode terminal, the predetermined connector contact comes into contact with the switch contact to output a detection signal.

In the removal of the battery pack from the battery pack holder, when the predetermined connector contact protrudes into the hollow portion by a predetermined distance according to a reduction in urging force of the electrode terminal of the battery pack, the predetermined connector contact comes into contact with the switch contact to output a detection signal. The power supply unit for electronic devices configured as above thus can detect incomplete fitting of the battery pack, namely, that the battery pack is almost completely removed. In addition, the connector contact for conductively connecting the electrode terminal of the battery pack to the driver circuit of the electronic devices is used as a moving contact that touches and separates from the switch contact. Therefore, the power supply unit has a simple and compact structure compared to when a detector switch unit is provided separately.

For example, if the predetermined connector contact keeps contact with the corresponding electrode terminal when the predetermined connector contact touches the switch contact, and if power supply from the backup power source to the driver circuit starts according to the detection signal, when the battery pack is removed from the battery pack holder, power supply from the backup power source can start before the power supply from the battery pack is cut off, and therefore the driver circuit is continuously supplied with power.

Additionally, concerning the above power supply unit, if a connector that functions as a detector switch is configured by accommodating the predetermined connector contact and the switch contact in an insulating housing with an opening and making part of the predetermined connector contact retractably protrude out of the housing through the opening, and if the connector is built into the battery pack holder, it is made possible to improve usability and the ease in building the power supply unit because the switch contact and the connector contact are unitized. In this case, the connector may be configured by disposing the switch contact and a plurality of connector contacts side by side in one housing. For example, adopting the connector that unitizes the required number of connector contacts and the switch contact makes it possible to improve to a large extent the ease in building the power supply unit.

### BRIEF DESCRIPTION OF THE DRAWINGS

FIG. 1 is a perspective view of a power supply unit according to an embodiment of the present invention;
FIG. 2 is an exploded perspective view of a switch-connector shown in FIG. 1;
FIG. 3 is an external view of the switch-connector;
FIG. 4 is an illustration of the internal structure of the switch-connector;
FIGS. 5A, 5B, and 5C are illustrations of switching action of the switch-connector;
FIGS. 6A, 6B, 6C, and 6D are illustrations of removal of the battery pack shown in FIG. 1 from the battery pack holder;
FIG. 7 is an exploded perspective view of a switch-connector according to another embodiment of the present invention; and
FIG. 8 is an external view of the switch-connector shown in FIG. 7.

### DESCRIPTION OF THE PREFERRED EMBODIMENTS

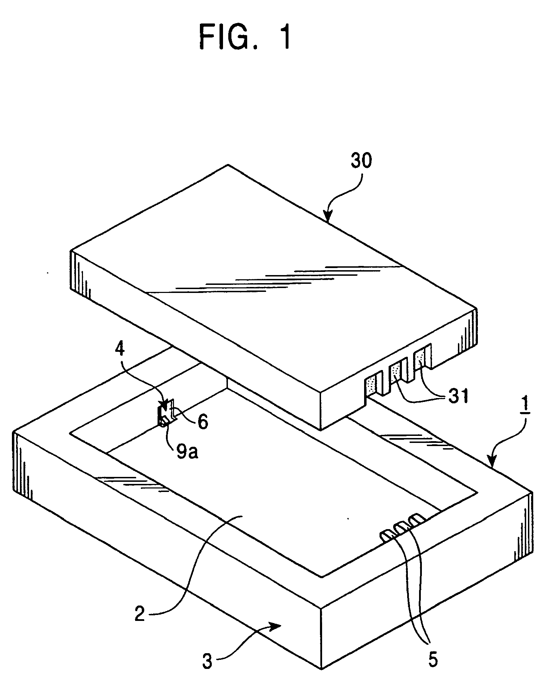

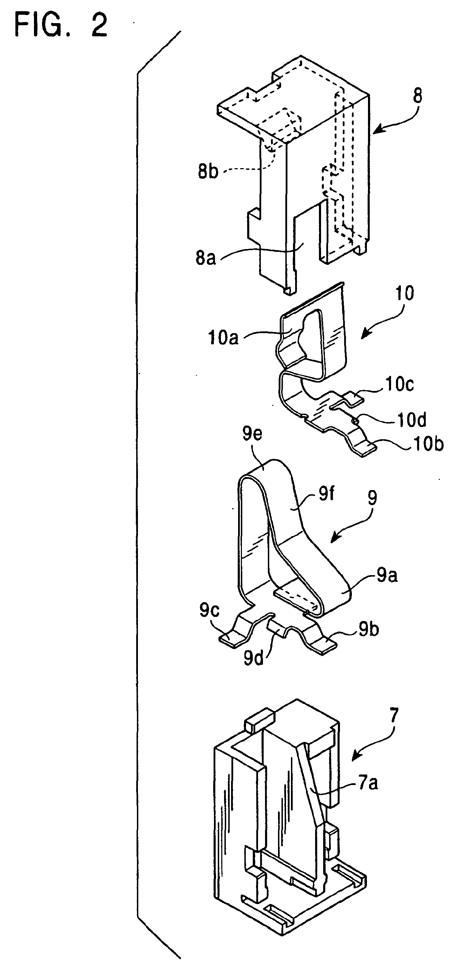

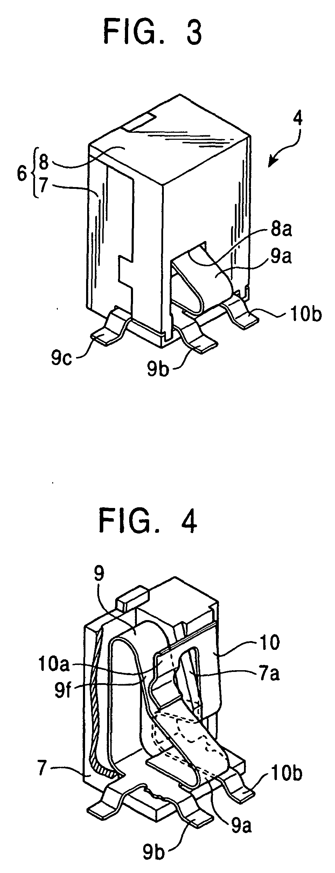

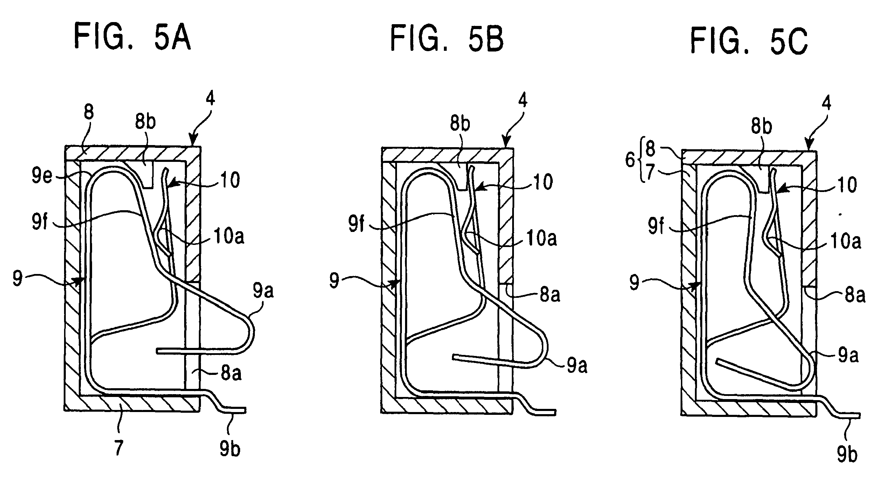

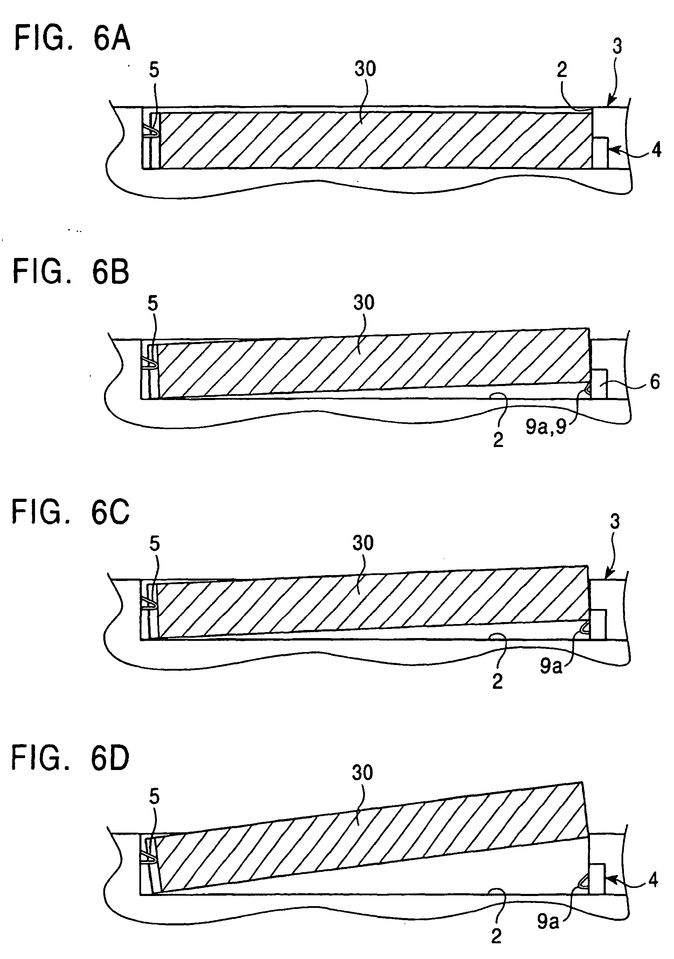

The preferred embodiments of the present invention will now be described with reference to the drawings. FIG. 1 is a perspective view of a power supply unit according to an embodiment of the present invention; FIG. 2 is an exploded perspective view of a switch-connector shown in FIG. 1; FIG. 3 is an external view of the switch-connector; FIG. 4 is an illustration of the internal structure of the switch-connector; FIGS. 5A, 5B, and 5C are illustrations of switching action of the switch-connector; and FIGS. 6A, 6B, 6C, and 6D are illustrations of removal of the battery pack shown in FIG. 1 from the battery pack holder.

The power supply unit 1 shown in FIG. 1 is built in electronic devices such as personal digital assistants and for supplying power to a driver circuit of the electronic device. A battery pack 30 is fitted to the power supply unit 1. The power supply unit 1 includes a battery pack holder 3, a switch-connector 4 that functions as a connector and a switch, and three connector contacts 5. The battery pack holder 3 has a hollow portion 2 to accommodate the battery pack 30 detachably. The switch-connector 4 is built in the battery pack holder 3, facing the hollow portion 2. The three connector contacts 5 are disposed opposite the switch-connector 4 and the free end of each connector contact 5 protrudes toward the hollow portion 2 from the wall surface of the battery pack holder 3. The battery pack 30 has a total of four electrode terminals 31 on its surface at one end and the other end. The switch-connector 4 functions as a switch to detect whether the battery pack 30 is properly fitted to the battery pack holder 3 or not. The electrode terminals 31 of the battery pack 30 are conductively connected to the driver circuit through part of the switch-connector 4 and the connector contacts 5.

The battery pack holder 3 is formed of an insulating material. Its frame-shaped portion surrounding the hollow portion 2 has internal spaces for accommodating the switch-connector 4 and the connector contacts 5. The battery pack holder 3 has a built-in circuit board (not shown), on which the switch-connector 4 and the connector contacts 5 are mounted.

As shown in FIGS. 2 to 5C, the switch-connector 4 is composed of mainly a housing 6, a switch-connector contact 9, and a switch contact 10. The housing 6 is a box composed of an insulating case 7 and an insulating cover 8. The switch-connector contact 9 is formed of conductive metal and it has a connector contact portion 9a which is a free end retractably protruding from the housing 6. The switch contact 10 is formed of conductive metal and it is so held in the housing 6 that the switch contact 10 and the switch-connector contact 9 can touch and separate.

The case 7 has a partition wall 7a that separates a space for disposing the switch-connector contact 9 and a space for disposing the switch contact 10 to prevent short-circuiting. The cover 8 has an opening 8a from which the connector contact portion 9a protrudes and a projection 8b for restricting movement of the switch-connector contact 9 and the switch contact 10. The switch-connector contact 9 has, at its base, external connecting terminals 9b and 9c which protrude from the case 7 and a positioning pin 9d which is pressed into the bottom of the case 7. The switch-connector contact 9 has a moving contact portion 9f between the connector contact portion 9a and a U-shaped top portion 9e. The top portion 9e is restricted from moving in the housing 6 by the projection 8b of the cover 8. The switch contact 10 has, at its base, external connecting terminals 10b and 10c which protrude from the case 7 and a positioning pin 10d which is pressed into the bottom of the case 7. The switch contact 10 has, at its free end, an L-shaped extension 10a extending across the partition wall 7a to the switch-connector contact 9. The end of the extension 10a and the moving contact portion 9f of the switch-connector contact 9 can touch and separate.

The switch-connector 4 functions as a normally closed type of switch. In the initial condition shown in FIG. 5A, the connector contact portion 9a of the switch-connector contact 9 protrudes from the opening 8a to a large extent, and the moving contact portion 9f of the switch-connector contact 9 is elastically pressed against the end of the extension 10a of the switch contact 10. When the connector contact portion 9a is pressed into the housing 6 to a large extent, as shown in FIG. 5C, the moving contact portion 9f separates from the extension 10a according to elastic deformation of the switch-connector contact 9. As for the switch contact 10, the upper part of the extension 10a is elastically pressed against the projection 8b of the cover 8 and restricted from moving. FIG. 5B shows the moving contact portion 9f and the extension 10a that are on the point of touching/separating. At this moment, the extent to which the connector contact portion 9a protrudes from the opening 8a is nearly half of that in the initial condition. Since the switch-connector contact 9 and the switch contact 10 can thus touch and separate, the switch-connector 4 can function as a detector switch. When the switch-connector contact 9 and the switch contact 10 touch, a detection signal is output from the external connecting terminal 10b (or 10c).

Each connector contact 5 is formed of conductive metal and it is similar to the switch-connector contact 9 in shape. The connector contact portion 9a of the switch-connector contact 9 protrudes in the lower part of the hollow portion 2. But on the other hand, the free ends of the connector contacts 5, which touch the electrode terminals 31, protrude in the upper part of the hollow portion 2. This is so that the connector contacts 5 can separate from the electrode terminals later than the switch-connector contact 9 when the battery pack 30 is removed from the battery pack holder 3. This makes it easy to keep contact between three electrode terminals 31 and the connector contacts 5 when the other electrode terminal 31 separates from the switch-connector contact 9.

The switch-connector contact 9 and the connector contacts 5 are disposed in the positions corresponding to the electrode terminals 31 of the battery pack 30. When the battery pack 30 is fitted in the hollow portion 2, the electrode terminals 31 are pressed against the free ends of the switch-connector contact 9 and the connector contacts 5. The switch-connector contact 9 and the connector contacts 5 are deformed elastically and pressed against the corresponding electrode terminals 31 with sufficient urging force. The external connecting terminal 9b (or 9c) of the switch-connector contact 9 and an external connecting terminal (not shown) of each connector contact 5 are soldered to the circuit board and connected to the driver circuit. By fitting the battery pack 30 to the hollow portion 2 properly, the electrode terminals 31 are conductively connected with the driver circuit and power supply from the battery pack 30 is made possible.

The external connecting terminal 10b (or 10c) of the switch contact 10 is soldered to the circuit board and connected to a backup power source (not shown). The backup power source discharges as needed to enable power supply to the driver circuit. When the switch-connector 4 is switched off, the backup power source does not operate. When the switch-connector 4 is switched on, the backup power source supplies power to the driver circuit.

As in this embodiment, providing the switch-connector contact 9 and the switch contact 10 with a pair of external connecting terminals each and soldering either of the terminals to the circuit board as a dummy terminal which does not function electrically are preferable because they increase degree of freedom of wiring pattern and mechanical strength.

The operation of the above power supply unit 1 will now be described. When the battery pack 30 is not fitted in the hollow portion 2 of the battery pack holder 3, as shown in FIG. 1, the free ends of the switch-connector contact 9 and the connector contacts 5 protrude toward the hollow portion 2 to a large extent. At this time, since the switch-connector contact 9 and the switch contact 10 touch in the housing 6 as shown in FIG. 5A, the switch-connector 4 is switched on. Therefore, if the backup power source is charged, power is supplied from the backup power source to the driver circuit.

Normally the battery pack 30 is fitted into the hollow portion 2. Therefore, as shown in FIG. 6A, the switch-connector contact 9 and the connector contacts 5 are pressed into the battery pack holder 3 by the corresponding electrode terminals 31. In this condition, each electrode terminal 31 is conductively connected to the driver circuit through the switch-connector contact 9 and the connector contacts 5, and therefore power is supplied to the driver circuit from the battery pack 30. On the other hand, the switch-connector contact 9 and the switch contact 10 do not touch in the housing 6 as shown in FIG. 5C, that is to say the switch-connector 4 is switched off, and therefore power is not supplied from the backup power source.

When the run-down battery pack 30 is removed from the battery pack holder 3, the battery pack 30 is tilted slowly and pulled out of the hollow portion 2 as shown in FIGS. 6B to 6D. In this case, as described above, the switch-connector contact 9 separates from the electrode terminal 31 earlier than the connector contacts 5. FIG. 6B shows the connector contact portion 9a of the switch-connector contact 9 protruding into the hollow portion 2 by a predetermined distance according to a reduction in urging force of the electrode terminal 31. At this time, in the housing 6, the moving contact portion 9f of the switch-connector contact 9 comes into contact with the extension 10a of the switch contact 10 as shown in FIG. 5B, and therefore the switch-connector 4 is switched from off to on. Power supply from the backup power source to the driver circuit thus starts. At this time, the connector contact portion 9a and the electrode terminal 31 are still kept in contact, and therefore power supply from the battery pack 30 is not cut off. When the electrode terminal 31 separates from the connector contact portion 9a as shown in FIG. 6C, power supply from the battery pack 30 is cut off. Then, the battery pack 30 is tilted to a large extent and pulled out of the hollow portion 2 as shown in FIG. 6D. A new battery pack is fitted in the hollow portion 2 in the reverse procedure. When its electrode terminal comes into contact with the connector contact portion 9a, power supply from the battery pack starts. When the connector contact portion 9a is pressed into the battery pack holder 3 to an extent more than that as shown in FIG. 6B, power supply from the backup power source is cut off.

As described above, according to this embodiment, when the battery pack 30 is removed from the battery pack holder 3, power supply from the backup power source can start before the power supply from the battery pack 30 is cut off, and therefore the driver circuit is continuously supplied with power. A personal digital assistant with the power supply unit 1 does not lose the transmitting and receiving function when the battery pack 30 is replaced, and therefore it has improved usability. In addition, the switch-connector contact 9 of the switch-connector 4 has the function as a moving contact of a switch that detects incomplete fitting of the battery pack 30 as well as the function as a connector conductively connected to the electrode terminal 31 of the battery pack 30. Therefore, the power supply unit 1 has a simple and compact structure compared to when a detector switch unit is provided separately. Besides, since the switch-connector 4 is unitized, the power supply unit 1 is readily built.

Although a single switch-connector 4 is provided in the power supply unit 1 according to this embodiment, two switch-connectors 4 may be disposed in the walls of the battery pack holder 3 which are opposite to each other.

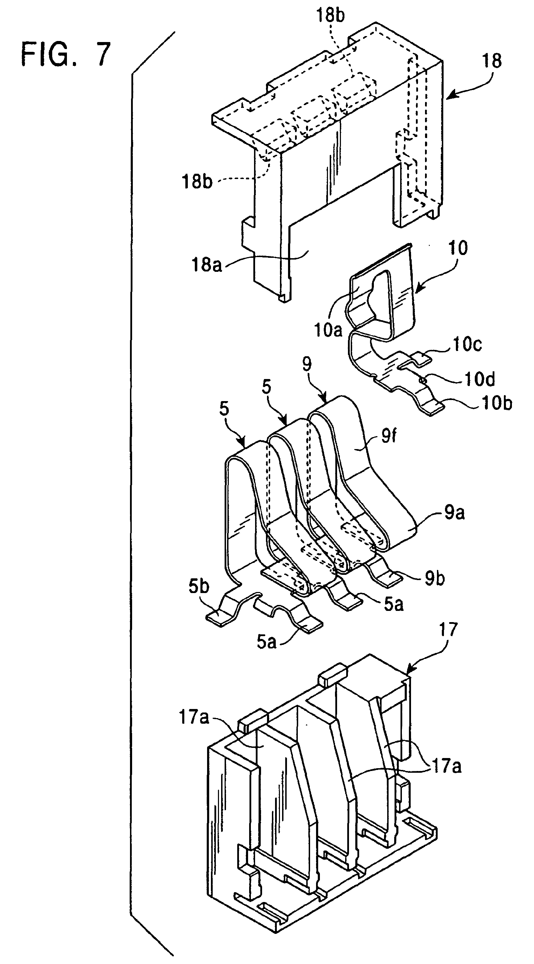

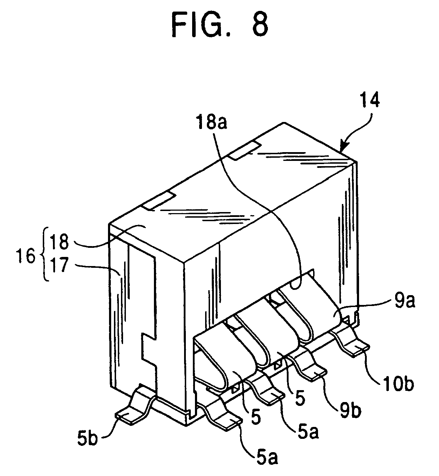

As shown in FIGS. 7 and 8, adopting a switch-connector 14 that unitizes not only the switch-connector contact 9 and the switch contact 10 but also the required number of connector contacts 5 makes it possible to improve further the ease in building the power supply unit 1. In this case, an insulating housing 16 is composed of a case 17 and a cover 18. The case 17, in which the connector contacts 5, the switch-connector contact 9, and the switch contact 10 are disposed side by side, has a plurality of partition walls 17a for preventing short-circuiting. The cover 18 has, on the top surface of its inside, a plurality of projections 18b for restricting movement of the connector contacts 5, the switch-connector contact 9, and the switch contact 10. In FIGS. 7 and 8, the connector contacts 5 and the switch-connector contact 9 are basically the same in shape. Each connector contact 5 has external connecting terminals 5a and 5b. The connector contact portion 9a and the free ends of the connector contacts 5 protrude from an opening 18a toward the hollow portion 2.

The present invention is embodied as described above, and it has the following advantages.

In the removal of the battery pack from the battery pack holder, when the predetermined connector contact protrudes into the hollow portion by a predetermined distance according to a reduction in urging force of the electrode terminal of the battery pack, the predetermined connector contact comes into contact with the switch contact to output a detection signal. Therefore, it is possible to detect incomplete fitting of the battery pack, namely, that the battery pack is almost completely removed. Therefore, if the backup power source is operated according to the detection signal, when the battery pack is removed from the battery pack holder, power supply from the backup power source can start before the power supply from the battery pack is cut off, and usability of electronic devices such as personal digital assistants can be improved. In addition, the connector contact for conductively connecting the electrode terminal of the battery pack to the driver circuit of the electronic device is used as a moving contact that touches and separates from the switch contact. Therefore, the power supply unit has a simple and compact structure compared to when a detector switch unit is provided separately.

## Claims

1. A power supply unit that accommodates a battery pack with a plurality of electrode terminals and supplies power to a driver circuit of an electronic device, the power supply unit comprising:
an insulating battery pack holder with a hollow portion to accommodate the battery pack detachably;
a plurality of connector contacts formed of conductive metal and disposed inside the battery pack holder, part of each connector contact protruding toward the hollow portion; and
a switch contact formed of conductive metal and disposed inside the battery pack holder, the switch contact capable of detaching from or attaching to a predetermined one of the connector contacts;
wherein when the battery pack is accommodated in the hollow portion, the plurality of electrode terminals elastically come into contact with corresponding connector contacts to be conductively connected to the driver circuit, and the predetermined connector contact is elastically deformed by the corresponding electrode terminal to separate from the switch contact; and
wherein when the predetermined connector contact protrudes into the hollow portion by a predetermined distance according to a reduction in urging force of the electrode terminal, the predetermined connector contact comes into contact with the switch contact to output a detection signal.

2. A power supply unit according to Claim 1, wherein the predetermined connector contact keeps contact with the corresponding electrode terminal when the predetermined connector contact comes into contact with the switch contact, and power supply from the backup power source to the driver circuit starts according to the detection signal.

3. A power supply unit according to Claim 1 or 2, further comprising a connector that functions as a detector switch configured by accommodating the predetermined connector contact and the switch contact in an insulating housing with an opening and making part of the predetermined connector contact retractably protrude out of the housing through the opening, and then built into the battery pack holder.

4. A power supply unit according to any of Claims 1 to 3, wherein the switch contact and the plurality of connector contacts are disposed side by side in the housing.

## Patentansprüche

1. Stromversorgungseinheit, die einen Batterieblock mit einer Mehrzahl von Elektrodenanschlüssen aufnimmt und eine Treiberschaltung eines elektronischen Geräts mit Strom versorgt, wobei die Stromversorgungseinheit Folgendes aufweist:
einen isolierenden Batterieblockhalter mit einem hohlen Bereich zum lösbaren Aufnehmen des Batterieblocks;
eine Mehrzahl von Verbinderkontakten, die aus leitfähigem Metall gebildet sind und im Inneren des Batterieblockhalters angeordnet sind, wobei ein Teil jedes Verbinderkontakts zu dem hohlen Bereich hin hervorsteht; und
einen Schalterkontakt, der aus leitfähigem Metall gebildet ist und im Inneren des Batterieblockhalters angeordnet ist, wobei der Schalterkontakt in der Lage ist, sich von einen vorbestimmten der Verbinderkontakte zu trennen oder an diesen anzulegen;
wobei bei Unterbringung des Batterieblocks in dem hohlen Bereich die Mehrzahl der Elektrodenanschlüsse mit entsprechenden Verbinderkontaken elastisch in Kontakt gelangt, um mit der Treiberschaltung leitend verbunden zu werden, und der vorbestimmte Verbinderkontakt durch den entsprechenden Elektrodenanschluss verformt wird, um sich von dem Schalterkontakt zu trennen; und
wobei dann, wenn der vorbestimmte Verbinderkontakt entsprechend einer Reduzierung der Drückkraft des Elektrodenanschlusses über eine vorbestimmte Distanz in den hohlen Bereich hineinragt, der vorbestimmte Verbinderkontakt mit dem Schalterkontakt in Kontakt gelangt, um ein Detektionssignal abzugeben.

2. Stromversorgungseinheit nach Anspruch 1,
wobei der vorbestimmte Verbinderkontakt den Kontakt mit dem entsprechenden Elektrodenanschluss hält, wenn der vorbestimmte Verbinderkontakt mit dem Schalterkontakt in Kontakt gelangt, und wobei die Stromversorgung von der Zusatzstromquelle zu der Treiberschaltung in Abhängigkeit von dem Detektionssignal beginnt.

3. Stromversorgungseinheit nach Anspruch 1 oder 2,
weiterhin mit einem Verbinder, der als Detektorschalter wirkt, der unter Aufnahme des vorbestimmten Verbinderkontakts und des Schalterkontakts in einem isolierenden Gehäuse mit einer Öffnung sowie Anordnung eines Teils des vorbestimmten Verbinderkontakts in zurückziehbar aus dem Gehäuse durch die Öffnung hindurch herausragender Weise konfiguriert ist und sodann in den Batterieblockhalter eingebaut wird.

4. Stromversorgungseinheit nach einem der Ansprüche 1 bis 3,
wobei der Schalterkontakt und die Mehrzahl der Verbinderkontakte in dem Gehäuse Seite an Seite angeordnet sind.

## Revendications

1. Unité d'alimentation électrique qui reçoit une batterie avec une pluralité de bornes et fournit de l'énergie électrique à un circuit d'attaque d'un dispositif électronique, l'unité d'alimentation électrique comprenant :
- un support de batterie isolant avec une partie creuse destinée à recevoir la batterie de façon amovible;
- une pluralité de contacts de connexion formés d'un métal conducteur et disposés à l'intérieur du support de batterie, une partie de chaque contact de connexion faisant saillie en direction de la partie creuse; et
- un contact de commutation formé d'un métal conducteur et disposé à l'intérieur du support de batterie, le contact de commutation pouvant être détaché d'un contact prédéterminé parmi les contacts de connexion ou attaché à celui-ci;
dans laquelle la batterie est logée dans la partie creuse, la pluralité de bornes entrent en contact élastiquement avec les contacts de connexion correspondants aux fins d'être connectées de façon conductrice au circuit d'attaque, et le contact de connexion prédéterminé est déformé élastiquement par la borne correspondante pour être séparé du contact de commutation; et
dans laquelle, lorsque le contact de connexion prédéterminé fait saillie dans la partie creuse d'une distance prédéfinie, en fonction d'une réduction de la force de poussée de la borne, le contact de connexion prédéterminé entre en contact avec le contact de commutation pour délivrer un signal de détection.

2. Unité d'alimentation électrique selon la revendication 1, dans laquelle le contact de connexion prédéterminé reste en contact avec la borne correspondante lorsque le contact de connexion prédéterminé entre en contact avec le contact de commutation, et l'alimentation en courant du circuit d'attaque par la source d'alimentation de réserve commence en fonction du signal de détection.

3. Unité d'alimentation électrique selon la revendication 1 ou 2, comprenant en outre un connecteur qui fonctionne comme commutateur de détection, lequel est configuré en logeant le contact de connexion prédéterminé et le contact de commutation dans un boîtier isolant, muni d'une ouverture, et en faisant une partie du contact de connexion prédéterminé dépasser de façon rétractile par rapport au boîtier, à travers ladite ouverture, et lequel est ensuite monté dans le support de batterie.

4. Unité d'alimentation électrique selon l'une quelconque des revendications 1 à 3, dans laquelle le contact de commutation et la pluralité de contacts de connexion sont disposés côte à côte dans le boîtier.
